# EUROPEAN PATENT APPLICATION

(11) **EP 0 697 446 A1**
(43) Date of publication of application: **21.02.1996**
(21) Application number: 95850140.5
(22) Date of filing: 16.08.1995
(51) Int. Cl.: C09D 11/10, C08G 81/02

(54) **Lithographic ink vehicle composition**

(30) Priority: 17.08.1994 JP 215372/94
(71) Applicant: NIPPON OIL CO. LTD., Minato-ku Tokyo (JP)
(72) Inventor: Makino, Masaharu, Yokohama-shi, Kanagawa-ken (JP); Kobayashi, Yukio, Yokohama-shi, Kanagawa-ken (JP)
(74) Representative: Modin, Jan

(57) **Abstract**

A lithographic ink vehicle composition according to the invention comprises a binder which is a petroleum resin-modified phenolic resin resulting from the reaction of an acid-modified hydrocarbon resin and a phenolic resin having an alkyl substituent of 4-9 carbon atoms, a drying and/or semi-drying oil, and importantly a non-aromatic solvent. The binder resin is highly soluble in a non-aromatic solvent such as a high boiling naphthenic hydrocarbon. A lithographic ink prepared with the inventive vehicle has an excellent printability with objectionable misting held to an absolute minimum.

## Description

This invention relates generally to inks for lithographic or offset printing and particularly to lithographic ink vehicles.

Conventional sheet or heat-set inks used in lithographic printing comprise binders typically such as of rosin-modified phenolic resin, petroleum resin and alkyd resin, drying or semi-drying oils such as linseed, tung and safflower oils and vehicles chiefly comprised of high boiling petroleum solvents, the whole being kneaded together with suitable pigments. Most widely used as such petroleum solvent is an aromatic solvent which is reputed for high dissolving power with respect to binder resins. However, in line with the recent intensified cry for the protection and security of gloval environment, studies have been directed to a transition from aromatic to non-aromatic solvents such as typically naphthene solvents, which are regarded environmentally friendly at the site of printing operations. However, non-aromatic solvents per se are less capable of dissolving ink binder resins and affording attractive or glossy prints. To cope with this difficulty, it has been proposed to use increased amounts of a drying oil to be blended with a vehicle so as to form an oxidatively polymerized film over a printing paper. However, the resulting printing ink has much to be desired in respect of drying and setting qualities.

The present invention seeks to provide a lithographic ink vehicle composition which is conducive to high printability and which comprises a substantially non-aromatic solvent, a binder resin highly soluble therewith and a drying and/or semi-drying oil.

According to the invention, there is provided a lithographic ink vehicle composition which comprises a petroleum resin-modified phenolic resin having a weight average molecular weight of from 30,000 to 200,000 and resulting from the reaction of 100 parts by weight of an acid-modified hydrocarbon resin with 30-150 parts by weight of a phenolic resin having an alkyl substituent of 4-9 carbon atoms; the acid-modified hydrocarbon resin being derived from reacting (a) 100 parts by weight of a compound chiefly comprised of a 5-member cyclic compound and/or a Diels-Alder reaction product thereof, the compound (a) being represented by the formula 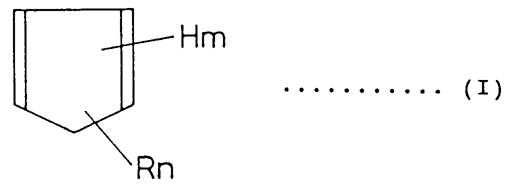
where H is hydrogen, R is an alkyl group of 1-3 carbon atoms, and m and n each are an integer of 0 or greater than 1 with m + n = 6, (b) 1-40 parts by weight of an alpha-olefin, and (c) 1-20 parts by weight of an unsaturated carboxylic acid and/or anhydride thereof; a drying and/or semi-drying oil; and a non-aromatic petroleum oil solvent.

The invention will be better understood from the following detailed description.

The binder used in the inventive ink vehicle is derived from the reaction of an acid-modified hydrocarbon resin (A) with a phenolic resin (B) having an alkyl substituent of 4-9 carbon atoms.

### Acid-Modified Hydrocarbon Resin (A)

This resin is derived from the reaction of 100 parts by weight of a compound (a) chiefly comprised of a 5-member cyclic compound of the formula (I) or its Diels-Alder reaction product, 1-40 parts by weight of an alpha-olefin (b) and 1-20 parts by weight of an unsaturated carboxylic acid or its anhydride (c). The 5-member cyclic compound (a) includes cyclopentadiene and methylcyclopentadiene, and its Diels-Alder reaction product exemplarily includes di-cyclopentadiene, cyclopentadiene/methylcyclopentadiene co-dimer and tri-cyclopentadiene. The component (a) may be such a compound which contains more than 50 percent by weight, preferably more than 80 percent by weight of the formula (I) cyclic compound and/or its Diels-Alder reaction product. It may be suitably made available from C₅ fractions by-produced during thermal cracking of naphtha and containing cyclopentadiene and methylcyclopentadiene which may be thermally dimerized to form
di-cyclopentadiene,
cyclopentadiene/methylcyclopentadiene co-dimer,
cyclopentadiene/isoprene co-dimer, and
cyclopentadiene/piperylene co-dimer. For use in the invention, C₅ olefins and C₅ paraffins in such products should be removed as much as possible by distillation. The component (a) may be further used in combination with unsaturated components in the petroleum distillates, particularly unsaturated aromatic components such as styrene, alpha-methylstyrene, vinyl toluene, indene, methyl indene or mixtures thereof. Therefore, C₉ fractions from naphtha cracking may also be utilized for the component (a).

The component (b) includes alpha-olefins of 4-40, preferably 6-20 carbon atoms which are preferably of a branched chain and free of straight chains or alkyl groups at the beta-position. Specific examples are 1-hexene, 4-methyl-1-pentene, 1-heptene, 1-octene, 1-nenon, 1-dodecene, 1-tetradecene, 1-hexadecene, 1-octadecene and 1-eicocene. There may also be used mixed alpha-olefins such that are mode available from oligomerization of ethylene (e.g. "Dialen" of Mitsubishi Chemicals) or thermal cracking of paraffin wax (e.g. Chevron-alpha-olefin of Chevron Corporation).

The component (c), which is an unsaturated carboxylic acid or its anhydride of 3-32, preferably 3-15 carbon atoms, exemplarily includes acrylic acid, methacrylic acid, maleic acid, maleic acid anhydride, tetrahydrophthalic acid and its anhydride, fumaric acid, citraconic acid, fatty acids of drying oil such as linseed fatty acid and mixtures thereof, of which particularly preferred are acrylic acid, methacrylic acid, maleic acid and its anhydride.

The components (b) and (c) are used in amounts of 1-40, preferably 5-30 parts by weight and 1-20, preferably 3-15 parts by weight, respectively, per 100 parts by weight of the component (a). Component (b) if used less than 1 weight part would decline in solubility with non-aromatic solvents for the binder resin, and if used in excess of 40 weight parts would result in reduced yields of the acid-modified hydrocarbon resin and further with reduced softening point of the resin. Component (c) if less than 1 weight part would lead to insufficient polar groups in the resin and if greater than 20 weight parts would result with poor solubility in non-aromatic solvents for the resultant binder resin and become susceptible to emulsification in lithographic wetting water.

The acid-modified hydrocarbon resin used in the invention may be prepared by reacting the three components (a), (b) and (c) simultaneously in a suitable reactor in the presence or absence of a catalyst, or alternatively the components (a) and (b) may be first reacted in the presence or absence of a catalyst, followed by the addition of the remaining component (c). Non-catalytic reaction may be carried out at 200°-300°C for 0.5-15 hours. If desired, the reaction may be effected with use of for example a Friedel-Crafts catalyst such as boron trifluoride, complexes thereof with phenol, ether and acetic acid, and aluminum chloride which may be added in an amount of 0.1-10 weight percent, the reaction being suitably at -30°-100°C for 10 minutes to 20 hours.

The resin thus prepared may be esterified with alcohols. This esterification is of high interest for controlling the solubility and softening point of the acid-modified hydrocarbon resin as well as the molecular weight of the final binder resin (petroleum resin-modified phenolic resin).

### Phenolic Resin (B)

This resin can be derived from condensation reaction of phenols having alkyl substituents of 4-9 carbon atoms with formalin. Such phenols include p-tert-butylphenol, sec-butylphenol, p-tert-octylphenol and nonylphenol. The phenolic resin (B) is effectively used in an amount of 30-150, preferably 35-100 parts by weight per 100 parts by weight of the acid-modified hydrocarbon resin (A). Amounts departing from the range of 30-150 parts by weight would fail to produce a petroleum resin-modified phenolic resin having a weight average molecular weight in the range of 30,000-200,000, preferably 50,000-150,000. Such molecular weights if less than 30,000 would result in reduced solubility with non-aromatic solvents and further with an ink susceptible to misting. Molecular weights exceeding 200,000 in the range would render it difficult to produce useful phenolic resins, and such resins if produced would lead to objectionably high viscosity of the vehicle and hence to difficult ink production. The desired petroleum resin-modified phenolic resin may also be prepared by reacting phenols having C₄-C₉ alkyl substituents with formalin in the presence of the resin (A).

The petroleum resin-modified phenolic resin used in the invention should have a softening point above 100°C, preferably above 130°C. Softening points lower than 100°C would cause undesirable misting of the resulting printing ink, deteriorated drying quality and hence blocking. The petroleum resin-modified phenolic resin should have an acid value of 5-50 mgKOH/g, preferably 5-25 mgKOH/g. Acid values less than 5 mgKOH/g would make it difficult to produce a vehicle having a great affinity to a pigment and would further result in reduced fluidity of the vehicle. Conversely greater than 50 mgKOH/g acid values would lead to declined solubility with non-aromatic solvents and increased susceptibility of the ink to emulsification by wetting water.

The inventive lithographic ink vehicle is prepared by dissolving 100 parts by weight of the aforesaid petroleum resin-modified phenolic resin in a mixture of 50-200, preferably 70-150 parts by weight of a non-aromatic solvent and 5-100, preferably 10-80 parts by weight of a drying oil and/or a semi-drying oil at room temperature or with heat. The vehicle may be kneaded together with a pigment directly or after being added with a gelatinizer to produce a lithographic ink.

A typical non-aromatic solvent eligible for the purpose of the invention is most suitably a high boiling naphthenic solvent which contains more than 60%, preferably more than 70% naphthenic hydrocarbon and has a boiling point above 200°C. Commercially available examples are AF Solvent of Nippon Oil Company Ltd. or Magie Solvent of Magie Bros. Oil Company.

The term drying oil or semi-drying oil as used herein includes linseed oil, tung oil, soybean oil and their boiled or stand oils or mixtures thereof.

The invention will be further described by way of the following examples.
Resin Formulation (1)
   A two-liter autoclave was charged with 1,000 grams of 97% pure dicyclopentadiene (DCPD) and 250 grams of a blend alpha-olefin of 6-10 carbon atoms. The admixture was reacted in nitrogen atmosphere at 280°C for 2-5 hours, followed by vacuum distillation at 210°C/2 mmHg thereby obtaining 1,150 grams hydrocarbon resin. 100 grams of this resin was dissolved at 200°C and reacted with 3 grams of maleic acid anhydride for 4 hours. 100 grams of the resulting acid-modified hydrocarbon resin was reacted at 220°C for 2 hours with 35 grams of resol phenolic resin derived from condensation reaction of p-tert-butylphenol and formalin. The resulting petroleum resin-modified phenolic resin is identified as Resin (1) in Table 1.
Resin Formulation (2)
   A two-liter autoclave was charged with 650 grams 97% pure DCPD, 538 grams naphtha cracked C₉ fraction (which contained 350 grams unsaturated components such as DCPD, vinyl toluene, alpha-methyl-styrene and indene), 100 grams blend alpha-olefin of 16-18 carbon atoms and 70 grams methacrylic acid. The admixture was reacted in nitrogen atmosphere at 270°C for 3 hours, followed by vacuum distillation at 210°C/2 mmHg thereby producing 1,152 grams of acid-modified hydrocarbon resin. To 100 grams of this resin was added 60 grams resol phenolic resin derived from condensation reaction of nonylphenol and formalin. The reaction was continued for 2 hours at 220°C until there was obtained a petroleum resin-modified phenolic resin (2).
Resin Formulation (3)
   The procedure of Resin Formulation (2) was followed except for the use of 43 grams of resol phenolic resin. There was obtained a petroleum resin-modified phenolic resin (3).
Control Resin Formulation (1')
   The procedure of Resin Formulation (1) was followed except that the amount of resol phenolic resin was 20 grams and no maleic acid anhydride was used. There was obtained a petroleum resin-modified phenolic resin (4).
Control Resin Formulation (2')
   The procedure of Resin Formulation (2) was followed except that the amount of resol phenolic resin was 10 grams. There was obtained a petroleum resin-modified phenolic resin (5).
Control Resin Formulation (3')
   The procedure of Resin Formulation (2) was followed except that the amount of resol phenolic resin was 160 grams. There was obtained a petroleum resin-modified phenolic resin (6).

The properties of the resultant petroleum resin-modified phenolic resins (1)-(6) are as shown in Table 1. The solubility of each of the resins (1)-(6) was determined by dripping a solvent into a vehicle of resin and solvent at a 50/50 weight ratio until the vehicle grew turbid. The solubility values indicated in Table 1 represent a multiple of dilution to which the dripping solvent was added and are the greater the better.

### Inventive Examples I-IV & Comparative Examples I-VI

As shown in Tables 2 and 3, there were produced red and black color inks, respectively and vehicles therefor comprising a range of binder resins and naphthene-based solvents and aromatic solvents for purposes of comparison.

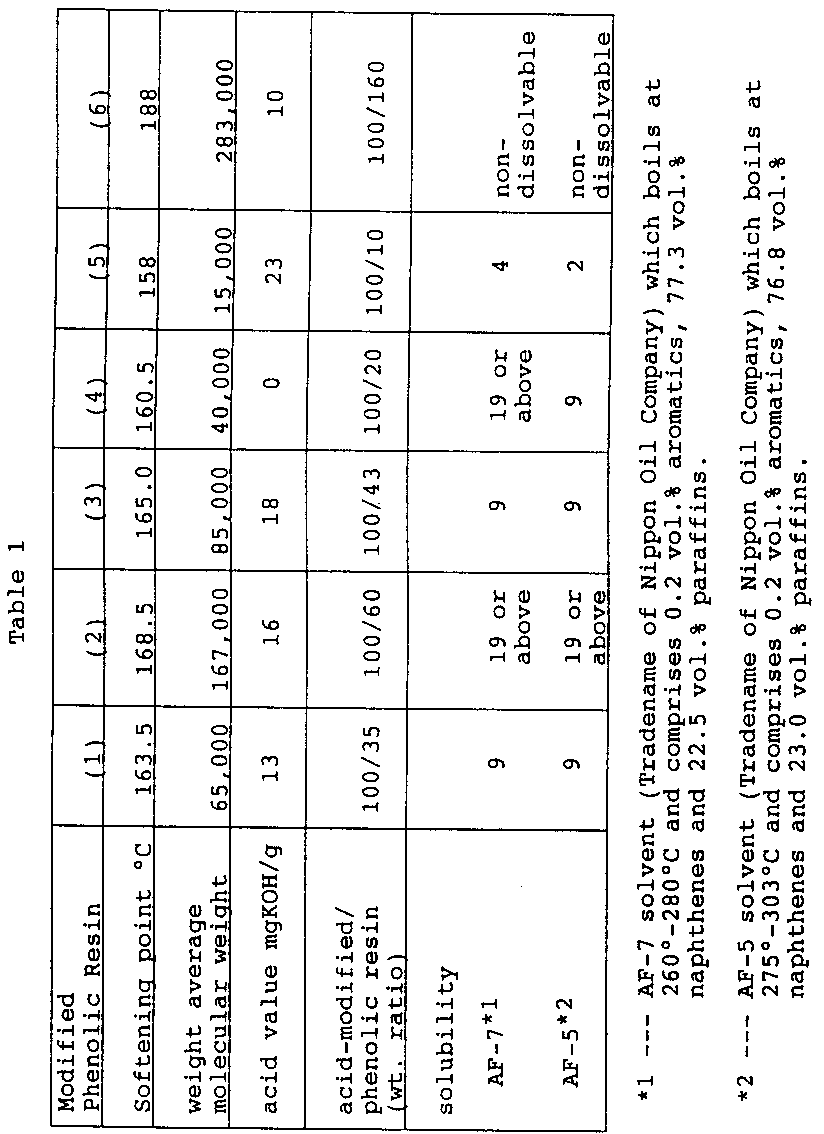

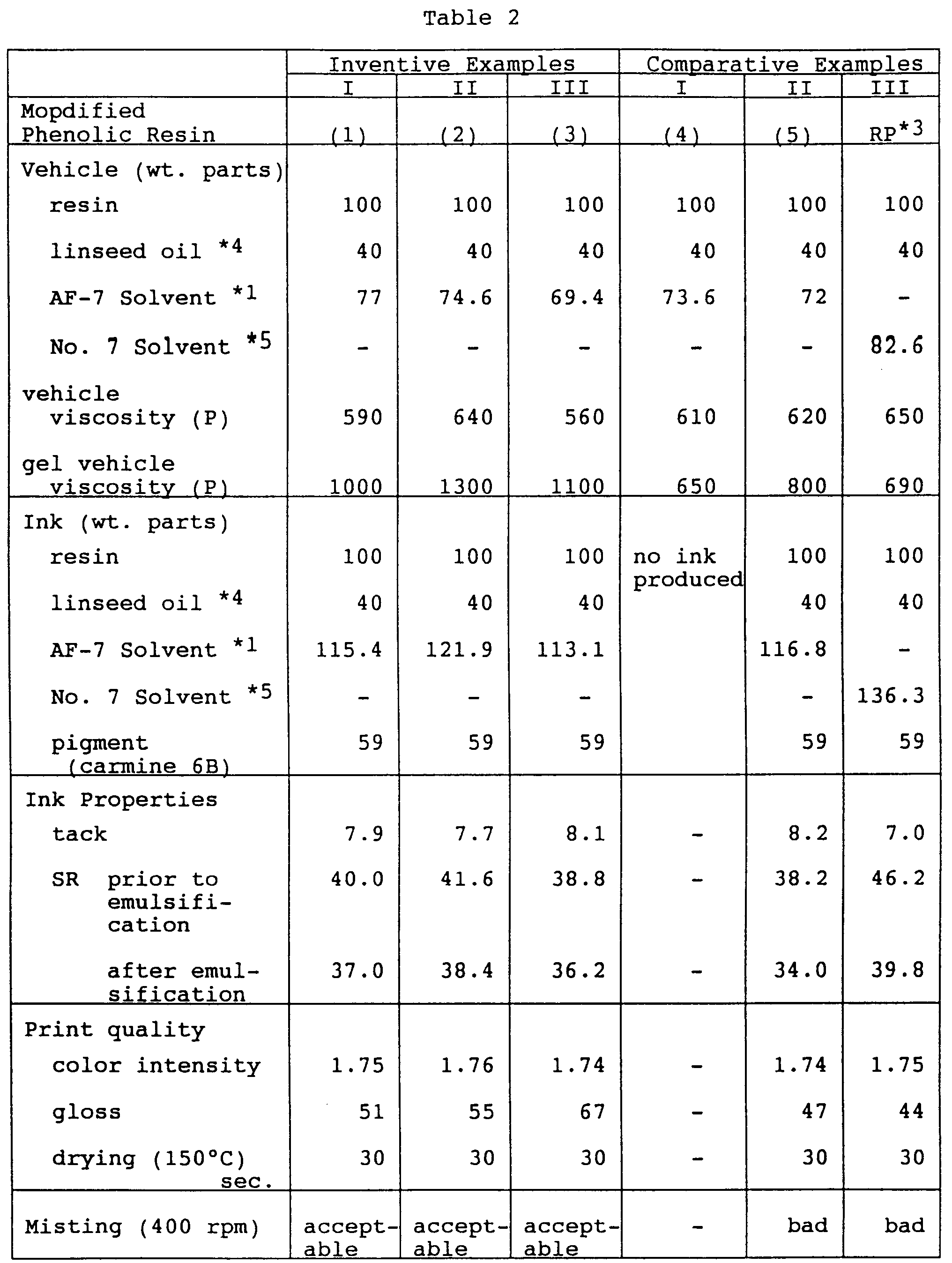

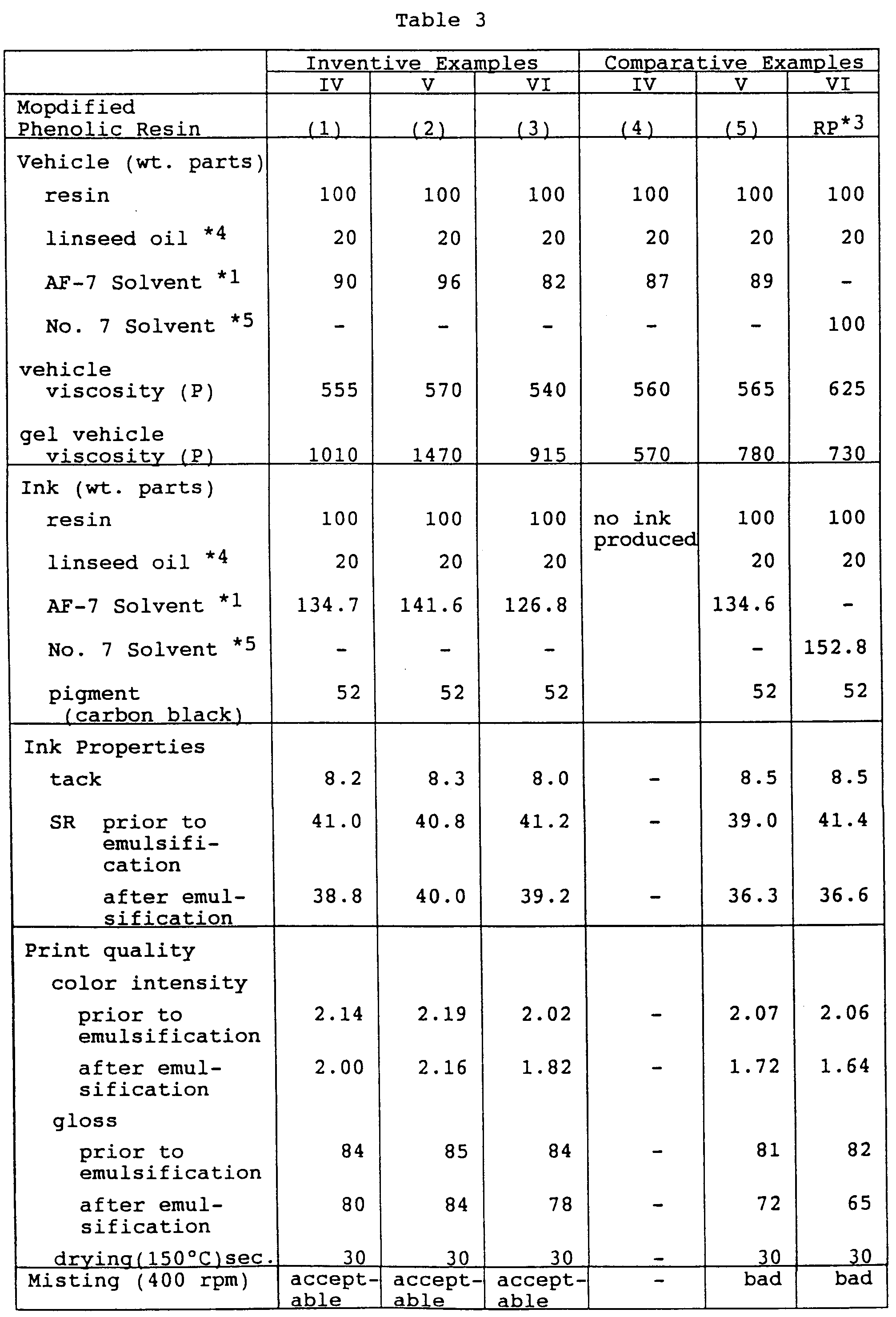

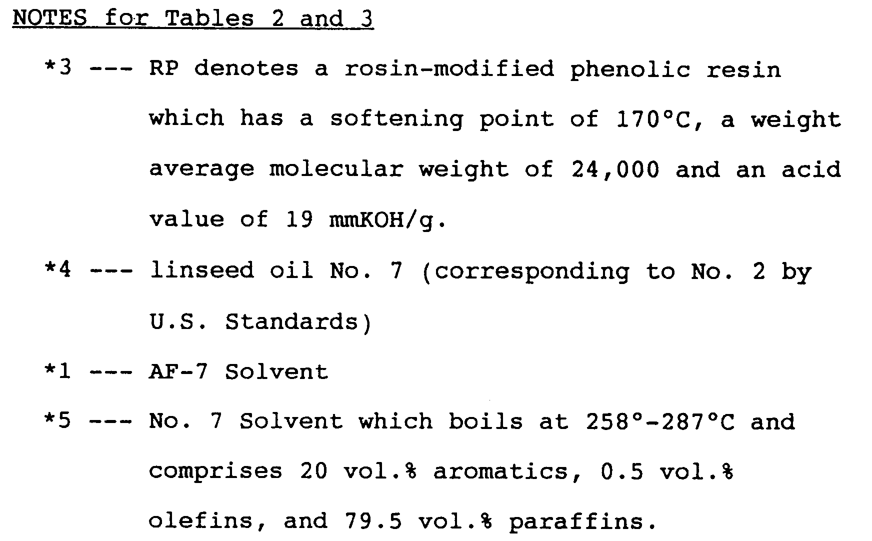

As appears clear from the evaluation of the properties of the various vehicle compositions and inks, the petroleum resin-modified phenolic resins as used in the invention can be a binder highly soluble with a non-aromatic solvent, and the inks to which the inventive vehicles are applied can exhibit significantly small differences in fluidity between prior to and after emulsification upon application to lithographic printing with misting reduced to a minimum.

## Claims

1. A lithographic ink vehicle composition which comprises a petroleum resin-modified phenolic resin, a drying and/or semi-drying oil and a non-aromatic petroleum oil solvent, CHARACTERIZED IN THAT said petroleum resin-modified phenolic resin has a weight average molecular weight of from 30,000 to 200,000 and is derived from the reaction of 100 parts by weight of an acid-modified hydrocarbon resin with 30-150 parts by weight of a phenolic resin having an alkyl substituent of 4-9 carbon atoms, said acid-modified hydrocarbon resin being derived from reacting (a) 100 parts by weight of a compound chiefly comprised of a 5-member cyclic compound and/or a Diels-Alder reaction product thereof, said compound (a) being represented by the formula 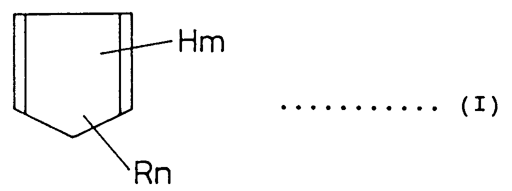 where H is hydrogen, R is an alkyl group of 1-3 carbon atoms, and m and n each are an integer of 0 or greater than 1 with m + n = 6, (b) 1-40 parts by weight of an alpha-olefin, and (c) 1-20 parts by weight of an unsaturated carboxylic acid and/or anhydride thereof.

2. A lithographic ink vehicle composition according to claim 1 wherein said non-aromatic petroleum oil solvent has a naphthenic hydrocarbon content of greater than 60% and a boiling point above 200°C.

3. A lithographic ink vehicle composition according to claim 1 characterized in that said drying or semi-drying oil is one selected from the group consisting of linseed oil, tung oil, soybean oil, their boiled or stand oils, and mixtures thereof.

4. A lithographic ink vehicle composition according to claim 1 characterized in that said petroleum resin-modified phenolic resin has a boiling point above 100°C and an acid value of 5-50 mgKOH/g.

5. A lithographic ink vehicle composition according to claim 1 characterized in that 100 parts by weight of said petroleum resin-modified phenolic resin is dissolved in a mixture of 50-200 parts by weight of said non-aromatic solvent and 5-100 parts by weight of said drying oil and/or semi-drying oil.
